# EUROPEAN PATENT APPLICATION

(11) **EP 4 711 188 A1**
(43) Date of publication of application: **18.03.2026**
(21) Application number: 25201337.0
(22) Date of filing: 10.09.2025
(51) Int. Cl.: B60L 53/00, B60L 53/10, B60L 53/14, B60L 53/18, B60L 53/30, B60L 53/31, B60L 53/63, B60L 53/66, B60L 55/00

(54) **SMART CHARGING OF AN ELECTRIC VEHICLE AND UTILIZATION OF CLOUD COMPUTING**

(30) Priority: 11.09.2024 FI 20246111
(71) Applicant: Salute Solutions Oy, 55120 Imatra (FI)
(72) Inventor: Ershov, Dmitrii, 55120 Imatra (FI)
(74) Representative: Primrose Oy

(57) **Abstract**

Disclosed is a system for communicating between and electric vehicle and a charging station, the system comprising a remote computing system and a charging station, wherein the charging station is connected to the remote computing system, the system further comprising means for: establishing a connection for digital data communication to the electric vehicle by the charging station, processing data, by the remote computing system, to produce a first set of data frames to be transmitted to the electric vehicle, transmitting the first set of data frames to the charging station by the remote computing system, transmitting, by the charging station, the first set of data frames to the electric vehicle by transmitting a first bit stream in accordance with the first set of data frames over the connection, receiving, by the charging station, a second bit stream from the electric vehicle over the connection, processing, by the charging station, the second bit stream to obtain a second set of data frames, transmitting, by the charging station, the second set of data frames to the remote computing system, and processing the second set of data frames by the remote computing system.

## Description

### FIELD

The present disclosure relates to charging of electronic vehicles and communication between a charging station and an electric vehicle.

### BACKGROUND

Electric vehicles use charging stations to charge their batteries. As the number of electric vehicles increases, so does the demand for electricity in a grid. Yet, the electric vehicle may be flexible in terms of when exactly it is charged as there may be several hours, or even some days, before the electric vehicle is needed again. On the other hand, the grid is to be in balance at all times meaning that the power provided to the grid is to match the consumption of power obtained from the grid. Thus, it would be desirable to effectively schedule the charging of the electric vehicle(s) such that it helps to keep the grid in balance.

### BRIEF DESCRIPTION

The scope of protection sought for various embodiments is set out by the independent claims. Dependent claims define further embodiments included in the scope of protection. The embodiments and features, if any, described in this specification that do not fall under the scope of the independent claims are to be interpreted as examples useful for understanding various embodiments of the disclosure.

According to a first aspect there is provided a computer-implemented method for a charging station that is for charging an electric vehicle, the method comprising: establishing a connection for digital data communication to the electric vehicle, obtaining, from a remote computing system, a first set of data frames to be transmitted to the electric vehicle using the connection, transmitting the first set of data frames to the electric vehicle by transmitting a first bit stream in accordance with the first set of data frames over the connection, receiving a second bit stream from the electric vehicle over the connection, processing the second bit stream to obtain a second set of data frames, and transmitting the second set of data frames to the remote computing system for further processing.

According to a second aspect, there is provided a computer program product comprising instructions, which, when executed by a computing device, cause the computing device to perform a computer-implemented method according to the first aspect.

According to a third aspect there is provided a non-volatile computer-readable medium comprising program instructions stored thereon which, when executed on a computing device, cause the computing device to perform a computer-implemented method according to the first aspect.

According to a fourth aspect there is provided a computer-implemented method for a remote computing system providing data processing for charging station that is for charging an electric vehicle, the method comprising: processing data to produce a first set of data frames to be transmitted to the electric vehicle, transmitting the first set of data frames to the charging station, receiving, from the charging station, a second set of data frames that are obtained by the charging station from the electric vehicle, and processing the second set of data frames.

According to a fifth aspect, there is provided a computer program product comprising instructions, which, when executed by a computing device, cause the computing device to perform a computer-implemented method according to the fourth aspect.

According to a sixth aspect there is provided a non-volatile computer-readable medium comprising program instructions stored thereon which, when executed on a computing device, cause the computing device to perform a computer-implemented method according to the fourth aspect.

According to a seventh aspect there is provided a system for communicating between and electric vehicle and a charging station, the system comprising a remote computing system and a charging station, wherein the charging station is connected to the remote computing system, the system further comprising means for: establishing a connection for digital data communication to the electric vehicle by the charging station, processing data, by the remote computing system, to produce a first set of data frames to be transmitted to the electric vehicle, transmitting the first set of data frames to the charging station by the remote computing system, transmitting, by the charging station, the first set of data frames to the electric vehicle by transmitting a first bit stream in accordance with the first set of data frames over the connection, receiving, by the charging station, a second bit stream from the electric vehicle over the connection, processing, by the charging station, the second bit stream to obtain a second set of data frames, transmitting, by the charging station, the second set of data frames to the remote computing system, and processing the second set of data frames by the remote computing system.

### DESCRIPTION OF THE DRAWINGS

The present disclosure discusses below some exemplary embodiments in greater detail with reference to the enclosed drawings, in which:
Fig. 1 illustrates an exemplary embodiment of a grid.
Fig. 2 illustrates an example of an OSI model for digital data communication.
Fig. 3 illustrates an exemplary embodiment of communication, which is digital data communication, between an EV and a charging station.
Fig. 4 illustrates an exemplary embodiment of a communication between a charging station and an EV when smart charging is used.
Fig. 5 illustrates an exemplary embodiment of a device that may be or may be comprised in a computing device or in a computing system comprising a plurality of computing devices.

### DETAILED DESCRIPTION

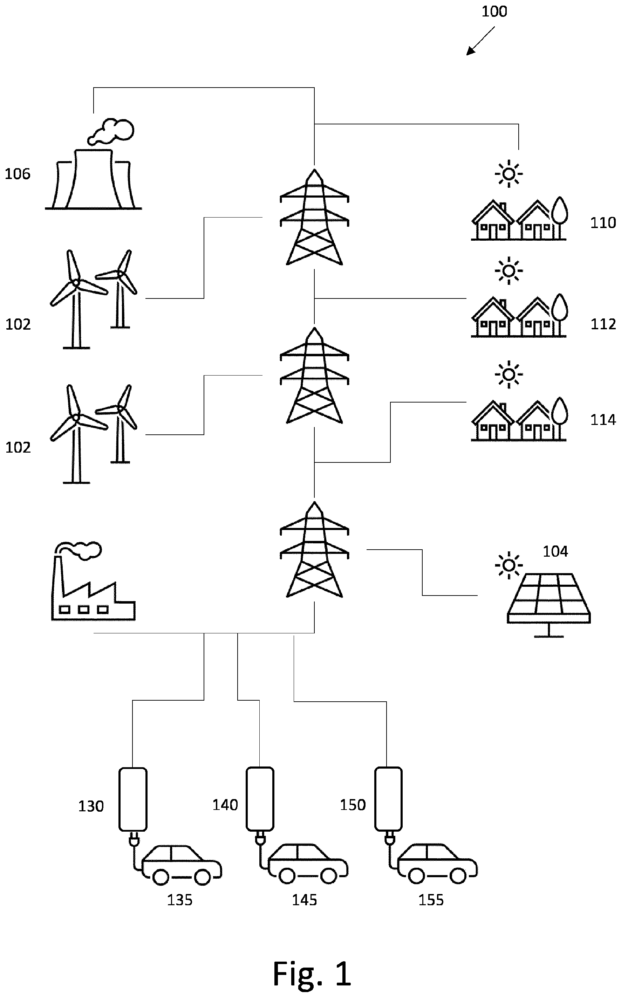

Electricity is required in normal day-to-day life and in various types of industrial activities. Figure 1 illustrates an exemplary embodiment of a grid 100, that may also be referred to as an electrical grid, electricity grid, or power grid. The grid 100 comprises elements of producing electricity, transmission of the electricity and then consuming electricity by different types of consumption units. In other words, the grid 100 comprises generation of electricity, and also transmission and distribution of the generated electricity.

The electricity may be generated by different types of power plants. The power plants may be based on renewable energy such as wind power 102, or solar power 104, or the power plants may be based on for example nuclear power 106, or coal. The consumption units may be for example households 110, 112, and 114, or industrial sites 120 or any other unit that electricity is provided for to meet end user demands. It is to be noted though that some consumption units may also act as production units. For example, charging stations 130, 140, and 150, that are connected to the grid for charging their respective electric vehicles (EVs) 135, 145, and 155, may consume electricity as they provide electricity to the EVs 135, 145, and 155, but the EVs 135, 145, and 155 could also act as a storage for electricity such that the electricity stored in their batteries could also be provided back to the grid. It is to be noted that an EV may be understood as a battery electric vehicle or a plug-in hybrid electric vehicle.

In the grid 100 the consumption of electricity by the consumption units is to be in balance with the generated electricity by the power plants. In case there would be an imbalance between generation and consumption of electricity in the grid, that could then lead to a significant blackout. In other words, the grid 100 is to have generation of electricity that matches the level of consumption in order to function properly and not to cause damage. Yet, the level of consumption varies over time and is not constant. Also, the power plants that are based on renewable energy, such as the wind turbine 102 and solar panel 104, may generate electricity with great variation and thus their generation is not constant. As the EVs may allow flexibility in terms of their consumption, they may negotiate with the grid a charging schedule that helps the grid to be in balance. For example, an EV may have information regarding its need for mobility, in other words, when the EV is needed next time and how full the battery should then be. So, the next departure time and range required may be taken into account. Additionally, there may be a situation in which the EV may act as a source of electricity by providing electricity from its battery to the grid 100. The grid 100 and the EV may then communicate, using digital communication, to agree on a charging schedule for the EV based on the needs of the EV, and/or capabilities of the EV to act as a source of electricity, and the current and predicted state of the grid 100. This may be understood as smart charging.

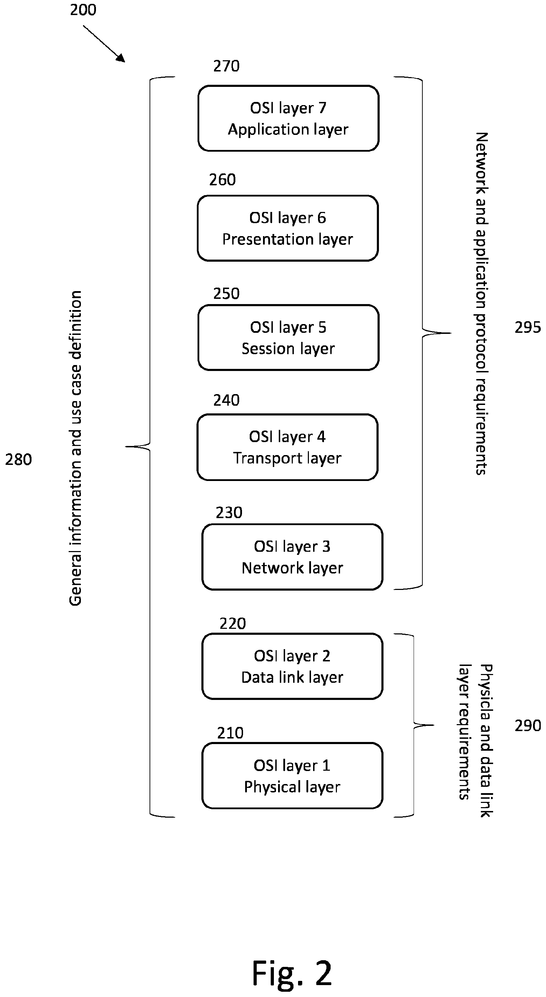

As the communication between the EV and the grid is digital, the communication may follow an OSI-model for digital data communication that is illustrated in figure 2. Digital communication may be enabled by computing systems, which may comprise one or more computing devices, respectively. The computing systems may be comprised in their respective devices such as an EV or a charging station comprised in the grid. A computing device may also be a microcontroller comprised in a device and enabling the digital communication, at least partly. The OSI-model 200 illustrated in the figure 2 may be understood as a reference model based on which a common basis for coordination of standards development for the purpose of interconnecting systems may be obtained. The OSI model may be understood as a theoretical description of the architecture of the interaction between the computing systems and it may be used as a basis for implementing the digital communication between the computing systems. The digital communication may also be referred to as high-level communication (HLC). The OSI-model 200 comprises 7 layers of abstraction, the layers 210, 220, 230, 240, 250, 260, and 270. Each of the layers has functionalities and each layer is able to communicate with the layers next to it. Each of the layers may be understood as a level of abstraction that enables communication between systems.

The first layer 210 is the OSI layer 1, which is a physical layer. The physical layer performs the action transmission and reception of raw bit streams over a physical medium. The physical medium may be for example a wired connection, such as a power-line connection, or in case of wireless communication, airwaves at radio frequency ranges, for example, may act as the physical medium. The second layer 220 is the OSI layer 2, which is a data link layer that provides transmission of data frames between data nodes, such as an EV and a charging station, that are connected using the physical layer. Thus, the data link layer may transform the received raw bit stream received from the physical layer into data frames. The third layer 230 is the OSI layer 3, that is a network layer. The network layer is for structuring and managing a network with multiple nodes. The network layer handles data packets that are to be transmitted between two nodes. The fourth layer 240 is the OSI layer 4, that is a transport layer. The transport layer handles data segments and is for reliably transmitting the data segments between two nodes.

The fifth layer 250 is the OSI layer 5, that is a session layer. The session layer is for handling a session that may comprise continuous exchange of information between nodes. The sixth layer 260 is the OSI layer 6, that is a presentation layer. The presentation layer is for translating data between networking service and an application. For example, the presentation layer may be for encrypting/decrypting data, and/or compressing/extracting data. The seventh layer is the OSI layer 7, which is an application layer. The application layer is for high-level protocols, for example, for resource sharing or remote file access.

As mentioned earlier, the reference model 200 may be used as a basis for communication enabling smart charging in which an EV and the grid, via a charging station, may communicate with each other and negotiate a charging schedule for the EV. It is to be noted that the charging schedule may also be rescheduled by re-negotiating. The negotiating may be understood as digital data communication that is based on data transmission between systems. The EV may communicate with the charging station it is connected to, and the charging station may represent the grid to the EV in the communication, as well as communicate with the gird itself for example by communicating with a unit that is for controlling operations of the grid. As the smart charging between different EVs and different charging stations is beneficial to be such that they all are interconnectable with each other, the smart charging may follow a standard. For example, the standard ISO 15118. For example, the layers 210 - 270 may be used to describe general information and use case definition 280 for the smart charging. This may follow a standard such as ISO 15118-1.

Layers 210-220 may be used to define requirements 290 for the smart charging in terms of physical and data link layer requirements. These may be standardized and for example standard ISO 15118-2 may be followed. This way for example exchange of messages between the EV and the charging station, using a charging cable, may be defined. The network and application protocol requirements 295 may be defined using the layers 230-270. Once the physical and data link layer is set up, then these requirements may be used for example to establish a TCP/IP connection between the communication controller of the EV and the communication controller of the charging station. These requirements 295 may follow a standard such as ISO 15118-2. It is to be noted that as part of these requirements, a so-called feature Plug and Charge may also be defined. Plug and Charge may deploy cryptographic mechanisms to secure the integrity, authenticity and confidentiality of the exchanged data. For example, a transport line security (TLS) protocol may be used.

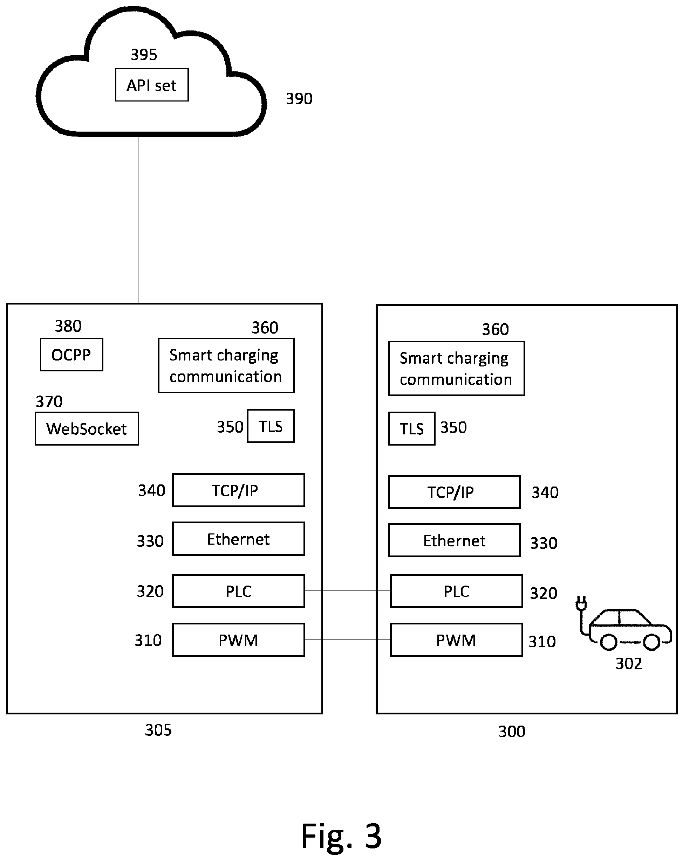

Figure 3 illustrates an exemplary embodiment of communication, which is digital data communication, between an EV and a charging station. As the communication is digital, it may be understood to be HLC. In this exemplary embodiment, the EV comprises a computing system that enables digital communication with external devices, such as the charging station, and the EV is connected to the charging station using a cable, but it is to be noted that the connection may be wireless as well. For example, the communication between the charging station and the EV may be based on a wireless data connection although the charging would be performed using a cable. Alternatively, the charging may be wireless charging and the communication between the charging station and the EV is also based on wireless data connection. The charging station may also comprise a computing system enabling the digital communication. For example, the computing system may be a computing device that is on a single board, or the computing system may be a microcontroller that is a computing device on a single chip and may also be referred to as a system on a chip (SoC).

In this exemplary embodiment, there is illustrated a communication system 300 for an EV 302. The communication system 300 communicates with the communication system 305 for the charging station. The communication systems 300 and 305 may be understood as computing systems in which one or more computing devices are used. The communication systems 300 and 305 may be hosted completely, or partly, by their respective device, the EV and the charging station. When the communication system is partly hosted, then one or more remote devices may be used to host some parts of the communication system. This communication enables smart charging 360 to be performed as the communication allows the charging station and the EV to negotiate, and optionally also re-negotiate a charging schedule for the EV. The smart charging may be in accordance with a standard such as the ISO 15118 standard.

In this exemplary embodiment, the communication between the communication system 300 and the communication system 305 may be based on the OSI model, and the communication may be in accordance with a standard, such as the ISO 15118. The physical connection 310, which may be considered to correspond to the physical layer, may be implemented using pulse-width modulation (PWM). The PWM represents a signal, which carries the bits that are transmitted between the communication systems 300 and 305, as a rectangular wave with a duty cycle that varies. The PWM may use any suitable switching frequency, for example, 1kHz. The data transfer taking place using PWM is analog data transfer. When the EV is connected to the charging station, the charging station may set the PWM parameters for data transfer.

Power-line communication (PLC) 320, which has its own implementation of a physical layer, which is different from the physical connection 310 that uses PWM for data transfer, may be used for enabling digital transfer. The EV may for example decide to switch to the digital data transfer after the charging station has set the PWM parameters. Thus, in this digital mode of data transmission, data frames are then transmitted in the PLC 320 that may be considered to correspond to a data link layer. The network layer in this exemplary embodiment corresponds to using Ethernet 330. The transport layer in this exemplary embodiment corresponds to TCP/IP framework 340. To ensure secure communication, TLS 350 is also used in the communication in this exemplary embodiment.

The communication system 305 for the charging station, that may be run using the computing system, such as a microcontroller comprised in the charging station, may use for example the WebSocket protocol to communicate with other communication systems. It may also use an open charge point protocol (OCPP) that is for the communication with the communication system 300 for the EV, and also for the communication systems with other EVs, and which enables the charging station to communicate with different central management systems. The OCPP thus allows any EV following the OCPP to communicate with the communication system 305 for the charging station and also with different central management system thus enabling the charging station to change the charging station network it is used for.

The communication system 305 for the charging station may also communicate with external computing system such as cloud computing system 390. For example, the cloud computing system 390 may host services that can be accessed by the communication system 305 using the application program interface (API) 395 hosted by the cloud computing system. This allows for example executing of some computing operations in the cloud computing system, which has more resources and also more storage space available, instead of executing them locally in the charging station.

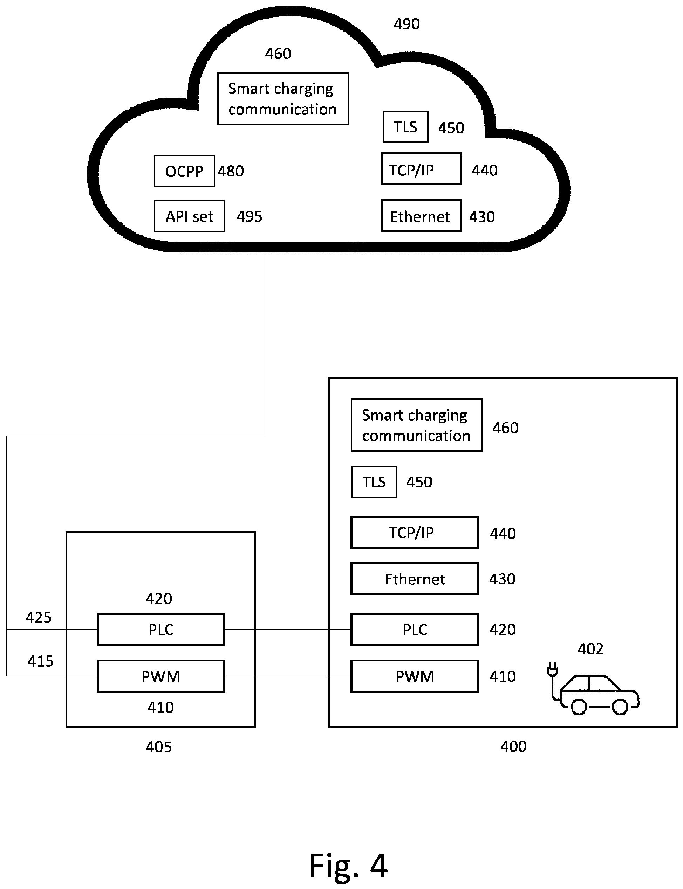

Figure 4 illustrates another exemplary embodiment of a communication, that is digital data communication enabled by computing systems comprising one or more computing devices, between a charging station and an EV when smart charging is used. This exemplary embodiment is a variation to the exemplary embodiment of Figure 3. In this exemplary embodiment also, the EV is connected to the charging station using a cable, but it is to be noted that the connection could be wireless as well. For example, the communication between the charging station and the EV may be based on a wireless data connection although the charging would be performed using a cable, or the charging could be wireless charging and the communication between the charging station and the EV is also based on wireless data connection. In this exemplary embodiment, the charging station comprises a computing system that comprises a microcontroller, or a computer device on a single board.

In this exemplary embodiment, there is illustrated a communication system 400 for an EV 402. The communication system 400 communicates with the communication system 405 for the charging station. The communication systems 400 and 405 may be understood to be implemented, using at least partly, the computing systems in which one or more computing devices are used. This communication enables smart charging 460 to be performed as the communication allows the charging station and the EV to negotiate, and optionally also re-negotiate a charging schedule for the EV. The smart charging may be in accordance with a standard such as the ISO 15118 standard.

**In** this exemplary embodiment, like in the previous exemplary embodiment, the communication between the communication system 400 and the communication system 405 may be based on the OSI model, and the communication may be in accordance with a standard, such as the ISO 15118. The physical connection 410, which may be considered to correspond to the physical layer, may be implemented using pulse-width modulation (PWM). The PWM represents a signal as a rectangular wave with a duty cycle 415 that varies. The PWM may use any suitable switching frequency, for example, 1kHz. The data transfer taking place using PWM is analog data transfer. When the EV is connected to the charging station, the charging station may set the PWM parameters for data transfer.

Power-line communication (PLC) 420, which has its own implementation of a physical layer, which is different from the physical connection 410 that uses PWM for data transfer, may be used for enabling digital transfer. The EV may for example decide to switch to the digital data transfer after the charging station has set the PWM parameters. Thus, in this digital mode of data transmission, data frames are then transmitted in the PLC 420 that may be considered to correspond to a data link layer. The data layers may be medium access control (MAC) frames 425. The communication between the communication systems 400 and 405 at the level of these layers may be in accordance with a standard, such as ISO 15118-3. In other words, these two lower layers may communicate in a standardized manner.

The upper layers, from layer 3 onwards are processed in the communications system 400 locally at the EV, but the communication system 405 does not perform the processing of the communication at the upper layers locally, at the charging station, but transmits and receives MAC frames 425 to and from a cloud-based computing service 490, which may also be referred to as cloud computing, in this exemplary embodiment. Thus, the communication system 405 may be implemented partly locally at the charging station and partly remotely at the cloud computing 490. This allows data frames, which in this exemplary embodiment are the MAC frames 425, to be transmitted between the local and remote part of the communication system 405. The communication that corresponds to the layers 3 and upwards may be in accordance with a standard such as ISO 15118-2. By having the processing of the communication that corresponds to upper layers processed in the cloud computing allows for better overall planning of the electricity consumption by a group of EVs. In other words, the overall power consumption caused by EVs connected to charging stations can be more efficiently negotiated and planned, when part of the communication is processed in the cloud computing part, which is the remote part, of the communication system that is for a charging station.

The upper layers of the communication are illustrated in this exemplary embodiment with the communication system 400, and correspondingly, in the cloud computing 490. The network layer in this exemplary embodiment corresponds to using Ethernet 430. The transport layer in this exemplary embodiment corresponds to TCP/IP framework 440. To ensure secure communication, TLS 450 is also used in the communication in this exemplary embodiment.

The communication system 405 for the charging station may use for example OCPP for the communication with the communication system 400 for the EV, and also for the communication systems with other EVs, and which enables the charging station to communicate with different central management systems. The OCPP is in this exemplary embodiment part of the communication that is processed in the cloud computing 490, in addition to processing the upper layers of the communication. The cloud computing then may also host the API set 495 hosted by the cloud computing system 490, which may provide processing of computing functionalities that the communication system 405 may then utilize.

As described in the exemplary embodiment of figure 4, a device, that may be a charging station for an EV, may comprise a computing system that comprises for example a microcontroller, can communicate with a remote computing system such as cloud computing. This may be utilized to have upper layers of smart charging processed using the remote computing system while the lower layers are processed by the charging station that then interfaces with an EV that is connected to the charging station for smart charging. In other words, a technical result can be achieved in which digital communication, which may also be understood as high-level communication (HLC), is processed in cloud computing, data frames, such as MAC frames are then transmitted between the cloud computing and charging station. The charging station may then process the lower layers of the communication. This allows simplifying the data processing required by the charging station, which may be an AC charging station. It is to be noted that although the upper layers in the exemplary embodiment above were from layer 3 onwards, the division between what is processed by the cloud computing and what is processed by the charging station could also be different.

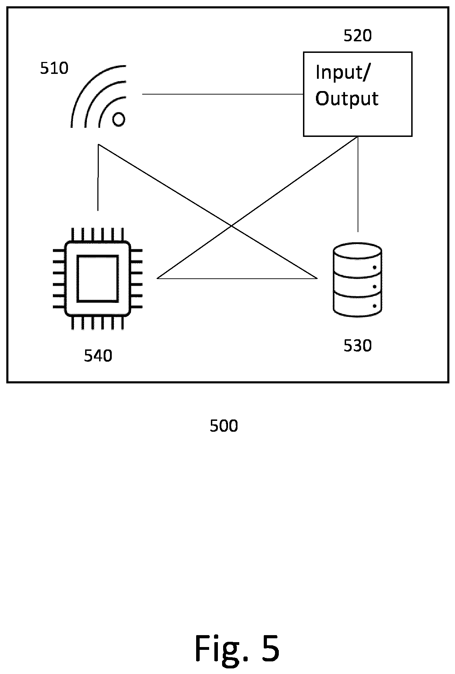

Figure 5 illustrates an exemplary embodiment of a device 500 that may be or may be comprised in a computing device or in a computing system comprising one or more computing devices. The computing device or a computing system are capable of performing computer implemented methods, such as a digital communication related to smart charging and taking place between an EV and a charging station, each comprising their respective computing system. Also cloud computing as well as databases may utilize computing devices. In this exemplary embodiment, the computing device comprises at least one processor 540, at least one memory 530, at least one connectivity unit 510 and at least one unit for receiving input and providing output 520. It is to be noted that the units described here are logical units and thus the actual implementation may vary. The at least one processor 540, at least one memory 530, at least one connectivity unit 510 and at least one unit for receiving input and providing output 520 may be connected to each other.

The at least one processor 540 may also be referred to as core, a central processing unit, or a microprocessor. A processor may be understood as an integrated circuit for performing calculations according to instructions provided using computer code. The at least one memory 530 may comprise volatile and/or non-volatile memory. Thus, the at least one memory 530 may be understood to be one block of memory or a combination of different blocks of memory. The memory may be for storing different types of data. The at least one memory 530 stores also computer program instructions, for example in the form of an application and/or an operating system. The at least one memory 530 provides computer program instructions to the at least one processor 540 for executing and the at least one processor 540 may then be configured to store data into the at least one memory 530. Some examples of memory are random access memories (RAMs), such as static RAM (SRAM) and dynamic RAM (DRAM), read-only memory (ROM), and flash memories. The input and output unit 520 may allow user input, such as pressing a button, touch input and/or voice input, to be received by the device 500 and output such as audio, haptic or visual output to be provided to a user. The connectivity unit 510 allows connection, such as a data connection, to be formed between the device 500 and another device. The connectivity unit may allow wireless and/or wired connections to be formed between the device 500 and other devices. Examples of connection types that may be supported by the connectivity unit 510 are cellular communication -based connections, local area networks, Bluetooth-connections, Wi-Fi connections, etc.

If the computing device is a microcontroller, which may also be referred to as a controller, then the computing device may comprise one or more processors, which may also be referred to as processor cores or cores, non-volatile and volatile memory or memories, and input/output peripherals such as counters, timers and/or converters converting between digital and/or analog forms of signals. These components may then be integrated on one chip, which allows effective real-time signal processing.

The present disclosure has been described above with reference to the exemplary embodiments. However, a person skilled in the art will understand there may be embodiments that vary from the example embodiments discussed above within the scope of the claims. Thus, skilled person will understand that the exemplary embodiments described above may, but are not required to, be combined with other exemplary embodiments in various manners. The present disclosure also describes a device and a way for establishing high-level communication with an electric vehicle in accordance with ISO 15118 standard, and performing ISO 15118 application layer data processing on the remote computer, thus assuring a simplification of an AC charging station.

## Claims

1. A computer-implemented method for a charging station that is for charging an electric vehicle, wherein the charging station comprises a computing device, the method comprising:
establishing a connection for digital data communication to the electric vehicle;
obtaining, from a remote computing system, a first set of data frames to be transmitted to the electric vehicle using the connection;
transmitting the first set of data frames to the electric vehicle by transmitting a first bit stream in accordance with the first set of data frames over the connection;
receiving a second bit stream from the electric vehicle over the connection;
processing the second bit stream to obtain a second set of data frames; and
transmitting the second set of data frames to the remote computing system for further processing, wherein the first set of data frames and the second set of data frames are comprised in the digital data communication, and the digital data communication is for negotiating a charging schedule for the electric vehicle.

2. A computer-implemented method according to claim 1, wherein the first set of data frames comprises a first set of medium access control frames, and the second set of data frames comprises a second set of medium access control frames.

3. A computer-implemented method according to claim 1 or 2, wherein the connection uses a cable.

4. A computer-implemented method according to claim 3, wherein the first bit stream is transmitted using a first pulse-width modulation, and the second bit stream is transmitted using a second pulse-width modulation.

5. A computer-implemented method according to claim 3 or 4, wherein the first set of data frames and the second set of data frames are data frames for power-line communication.

6. A computer-implemented method according to any previous claim, wherein obtaining the first set of data frames from the remote computing system comprises using an increased timeout with respect to a timeout associated with local processing of the data frames at the charging station, and/or
transmitting the second set of data frames to the remote computing system comprises using the increased timeout.

7. A computer-implemented method according to any previous claim, wherein the computing device comprised in the charging station is a microcontroller.

8. A computer-implemented method according to any previous claim, wherein the remote computing is system is implemented using cloud computing.

9. A computer-implemented method for a remote computing system providing data processing for charging station that comprises a computing device and is for charging an electric vehicle, the method comprising:
processing data to produce a first set of data frames to be transmitted to the electric vehicle;
transmitting the first set of data frames to the charging station;
receiving, from the charging station, a second set of data frames that are obtained by the charging station from the electric vehicle; and
processing the second set of data frames, wherein the first set of data frames and the second set of data frames are for digital data communication between the charging station and the electric vehicle, and the digital data communication is for negotiating a charging schedule for the electric vehicle.

10. A computer-implemented method according to claim 9, wherein the computer device comprised in the charging station is a microcontroller.

11. A computer-implemented method according to claim 9 or 10, wherein the first set of data frames comprises a first set of medium access control frames for power-line communication and the second set of data frames comprises a second set of medium access control frames for the power-line communication.

12. A computer-implemented method according to any of claims 9 to 11, wherein transmitting the first set of data frames to the charging station comprises using an increased timeout with respect to a timeout associated with local processing of the data frames at the charging station; and/or
receiving, from the charging station, a second set of data frames comprises using the increased timeout.

13. A computer program product comprising computer instructions stored in at least one memory which, when executed by at least one processor, cause a computing apparatus to perform a computer-implemented method according to any of claims 1 to 8.

14. A computer program product comprising computer instructions stored in at least one memory which, when executed by at least one processor, cause a computing apparatus to perform a computer-implemented method according to any of claims 9 to 12.

15. A system for communicating between and electric vehicle and a charging station, the system comprising a remote computing system and a charging station, wherein the charging station comprises a computing device, and is connected to the remote computing system, the system further comprising means for:
establishing a connection for digital data communication to the electric vehicle by the charging station;
processing data, by the remote computing system, to produce a first set of data frames to be transmitted to the electric vehicle;
transmitting the first set of data frames to the charging station by the remote computing system;
transmitting, by the charging station, the first set of data frames to the electric vehicle by transmitting a first bit stream in accordance with the first set of data frames over the connection;
receiving, by the charging station, a second bit stream from the electric vehicle over the connection;
processing, by the charging station, the second bit stream to obtain a second set of data frames;
transmitting, by the charging station, the second set of data frames to the remote computing system; and
processing the second set of data frames by the remote computing system, wherein the first set of data frames and the second set of data frames are for digital data communication between the charging station and the electric vehicle, and the digital data communication is for negotiating a charging schedule for the electric vehicle.

16. A system according to claim 15, wherein
transmitting the first set of data frames to the charging station comprises using an increased timeout with respect to a timeout associated with local processing of the data frames at the charging station, wherein the first set of data frames comprises a first set of medium access control frames; and/or
transmitting the second set of data frames to the remote computing system comprises using the increased timeout, wherein the second set of data frames comprises a second set of medium access control frames.
